# EUROPEAN PATENT APPLICATION

(11) **EP 2 180 640 A1**
(43) Date of publication of application: **28.04.2010**
(21) Application number: 07855930.9
(22) Date of filing: 29.12.2007
(51) Int. Cl.: H04L 12/28

(54) **AD-HOC NETWORK SYSTEM AND METHOD**

(30) Priority: 09.08.2007 CN 200710142908
(71) Applicant: ZTE Corporation, Shenzhen, Guangdong 518057 (CN)
(72) Inventor: FANG, Yadong, Shenzhen, Guangdong 518057 (CN); JIANG, Xin, Shenzhen, Guangdong 518057 (CN); CHEN, Dong, Shenzhen, Guangdong 518057 (CN); ZHANG, Kai, Shenzhen, Guangdong 518057 (CN)
(74) Representative: Gray, John James
(86) International application number: PCT/CN2007/003930
(87) International publication number: WO 2009/018699

(57) **Abstract**

A system and method of a self-organizing network is provided, and the system comprises: a Home NodeB (101); a Home NodeB configuration server (103), which interacts with the Home NodeB (101) and provides configuration data information and version information for the Home NodeB (101); a domestic network controller (104), which receives a scanning report formed by scanning information of adjacent cells by the Home NodeB (101) and reported by the Home NodeB after the Home NodeB completes system configuration according to the configuration data information and version information, and selects and allocates a carrier, a scrambler and a list of adjacent cells for the Home NodeB (101); and a security gateway (105) connecting with the Home NodeB (101), Home NodeB configuration server (103), and domestic network controller (104), which authenticates the Home NodeB (101) and establishes respectively paths between the Home NodeB (101) and either of the Home NodeB configuration server (103) and domestic network controller (104).

## Description

### Technical Field

The present invention relates to the communication field, and specifically, to a system and method of a self-organizing network.

### Background of the Related Art

In-building coverage has become the most important matter in 3G network construction. Appropriate in-building coverage scheme can allow the network to be utilized to the most extent and bring much more profits to the operator for one thing, and for another can save networking cost for the operator greatly to achieve in deed low cost and high profit. At present, more and more transnational operators hope to provide an "ALL in One" wireless access solution, namely a wireless access device which can supply various wireless access functions, and for subscribers using the device at home, the operators may provide favorable charges. Based on such requirement, a wireless access device, referred to as Home NodeB, is provided. As a creative access solution for local hot pots, the Home NodeB combines subtly the communication ways of fixed network and mobile network in a local hot pot (such as a household), and fully utilizes the respective advantages of fixed network and mobile network to satisfy requirements of subscribers and operators.

In addition, the Home NodeB can easily meet the requirement for a property of high speed access due to its small coverage area and few supported subscribers.

As for the run location, the Home NodeB has the following features:
(1) The Home NodeB is based on an all-IP network.
(2) There is a great quantity of Home NodeBs, of which the proprietorship belongs to subscribers; the Home NodeBs are distributed in households or offices, and places and time for installation are rather random, thus it is very difficult for the operator to give a network plan in advance. Therefore, it is almost impossible to perform drive test, adjustment, etc. for parameters of the Home NodeB, especially those related to the wireless environment, using a traditional method.
(3) The Home NodeB is put in a household or an office directly, and the subscriber using it generally does not have professional maintenance experience, therefore a plug-and-play property is preferably provided.

In sum, a method and system of a self-organizing network need to be provided to realize a Home NodeB secure access network with a self-organizing property.

### Summary of the Invention

The technical problem to be solved by the present invention is to provide a system and method of a self-organizing network, so as to realize a Home NodeB secure access network with a self-organizing property.

In order to solve the above technical problem, the present invention firstly provides a system of a self-organizing network, the system comprising a Home NodeB, and further comprising:
a Home NodeB configuration server, which interacts with the Home NodeB and provides configuration data information and version information for the Home NodeB;
a domestic network controller, which receives a scanning report formed by scanning information of adjacent cells by the Home NodeB and reported by the Home NodeB after the Home NodeB completes system configuration according to the configuration data information and version information, and selects and allocates a carrier, a scrambler and a list of adjacent cells for the Home NodeB; and
a security gateway, connecting with the Home NodeB, Home NodeB configuration server, and domestic network controller, and used to authenticate the Home NodeB and establish respectively paths between the Home NodeB and either of the Home NodeB configuration server and domestic network controller.

In the above system of the self-organizing network, the Home NodeB may compare acquired version information with version information stored in the Home NodeB, and if the versions are inconsistent, acquire specified version information from the Home NodeB configuration server.

In the above system of the self-organizing network, the Home NodeB may scan information of all the adjacent cells within a list of carriers according to the list of carriers acquired from the Home NodeB configuration server, and form the scanning report by reading common pilot channels, subsidiary channels, and broadcast channels of the adjacent cells.

In the above system of the self-organizing network, the domestic network controller may select an idle carrier or a carrier with lowest Received Signal Strength Indicator, select a scrambler with least conflicts with other cells on the same carrier, and select, according to Received Signal Strength Indicators, common Universal Mobile Telecommunication System cells or take other Home NodeB cells within a same group of the Home NodeB as adjacent cells of the Home NodeB.

In the above system of the self-organizing network, the security gateway may comprise:
a security gateway at the Home NodeB configuration server side, connecting with the Home NodeB configuration server and used to perform authentication when the Home NodeB establishes a path with the Home NodeB configuration server; and
a security gateway at the domestic network controller side, connecting with the domestic network controller and used to perform authentication when the Home NodeB establishes a path with the domestic network controller.

The present invention further provides a method of a self-organizing network, used for self-organization of a Home NodeB, and the method comprises steps of:
(1) a security gateway authenticating the Home NodeB and establishing a path between the Home NodeB and a Home NodeB configuration server;
(2) the Home NodeB interacting with the Home Node configuration server and acquiring configuration data information and version information from the Home Node configuration server;
(3) the Home NodeB scanning information of adjacent cells to form a scanning report after completing system configuration according to the configuration data information and version information;
(4) the security gateway authenticating the Home NodeB and establishing a path between the Home NodeB and a domestic network controller;
(5) the Home NodeB reporting the scanning report to the domestic network controller; and
(6) the domestic network controller selecting and allocating a carrier, a scrambler, and a list of adjacent cells for the Home NodeB, and a flow of the self-organizing network ending.

In the above method of the self-organizing network, the authentication of the Home NodeB by the security gateway in the step (1) may be implemented at the Home NodeB configuration server side; and the authentication of the Home NodeB by the security gateway in the step (4) may be implemented at the domestic network controller side.

In the above method of the self-organizing network, in the step (3), the Home NodeB may compare the acquired version information with version information stored in the Home NodeB, and if the versions are inconsistent, acquire specified version information from the Home NodeB configuration server.

In the above method of the self-organizing network, in the step (3), the Home NodeB may scan information of all the adjacent cells within a list of carriers according to the list of carriers acquired from the Home NodeB configuration server, and form the scanning report by reading common pilot channels, subsidiary channels, and broadcast channels of the adjacent cells.

In the above method of the self-organizing network, in the step (6), the domestic network controller may select an idle carrier or a carrier with lowest Received Signal Strength Indicator, select a scrambler with least conflicts with other cells on the same carrier, and select, according to Received Signal Strength Indicators, common Universal Mobile Telecommunication System cells or take other Home NodeB cells within a same group of the Home NodeB as adjacent cells of the Home NodeB.

Compared with the prior art, the present invention realizes a Home NodeB secure access network with a self-organizing property.

### Brief Description of the Drawings

FIG. 1 is a schematic diagram of a structure of a system according to an embodiment of the present invention;
FIG. 2 is a schematic diagram of a structure of a system according to an application example of the present invention;
FIG. 3 is a flow chart of a method according to an embodiment of the present invention;
FIG. 4 is a flow chart of a method according to an application example of the present invention.

### Preferred Embodiments of the Present Invention

The present invention will be described in further detail in the following in conjunction with accompanying drawings and preferred embodiments.

In regard to the above features of the Home NodeB, the communication network of the Home NodeB has to include the following features accordingly:
(1) the operation maintenance network and communication network of the Home NodeB must have adequate security; and
(2) The Home NodeB should have a self-organizing property such as automatic installation, automatic configuration, and automatically accessing communication services.

The self-organization herein consists of two portions, one is to provide a self-organizing network for automatic installation, automatic configuration, and automatic software update in operation maintenance of the Home NodeB; and the other is to provide a self-adapting communication service network, for which a radio access network (RAN) side allocates automatically information such as frequency carrier, scrambler, suitable radio power, and adjacent cells according to information reported by the Home NodeB.

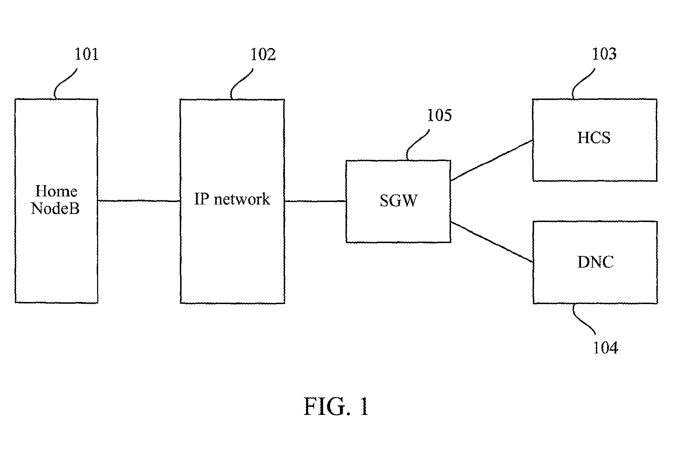

FIG. 1 is a schematic diagram of a structure of a system according to an embodiment of the present invention, which illustrates network devices composing the self-organizing network and relations among those network devices, and specifically, the system according to the present invention comprises:
a Home NodeB 101, functions of which are similar as those of a NodeB except for a smaller coverage, generally installed in a household or enterprise, and providing various wireless access functions;
an IP network 102, providing network support for the wireless access functions of the Home NodeB 101;
a Home NodeB configuration server (HCS) 103, of which an IP address is pre-configured and stored in the Home NodeB 101, being a core device of the self-organizing network, providing services of self-installation, self-configuration, and software update for the Home NodeB 101, and providing configuration data information and version information etc. to the Home NodeB 101 upon receiving a request from the Home NodeB 101, without interference of a subscriber; and also providing a function of centralized management of system data of the Home NodeB 101, so that alteration and maintenance of the configuration information of the Home NodeB 101 as well as version update are all performed in the HCS 103, which is a data management center of the self-organizing network.
a domestic network controller (DNC) 104, functions of which are similar as those of a radio network controller (RNC), supporting a special function of the DNC/Home NodeB, and the special function refers to: the Home NodeB 101 reports a scanning report including wireless environment information to the DNC 104, and DNC 104 allocats a carrier, a scrambler, and a list of adjacent cells to the Home NodeB according to the wireless environment information reported by the Home NodeB, so as to achieve self-adaptation of the communication network, without the need to manually configure a carrier, a scrambler, and a list of adjacent cells for the Home NodeB 101 at the DNC 104.
a security gateway (SGW) 105, of which an IP address is pre-configured and stored in the Home NodeB 101, providing Ipsec tunnels between the Home NodeB and the communication network of the DNC as well as between the Home NodeB and the operation maintenance network of the HCS, in order to ensure the security of network access, and taking charge of authenticating the Home NodeB and allocating a virtual private network (VPN) IP for the Home NodeB.

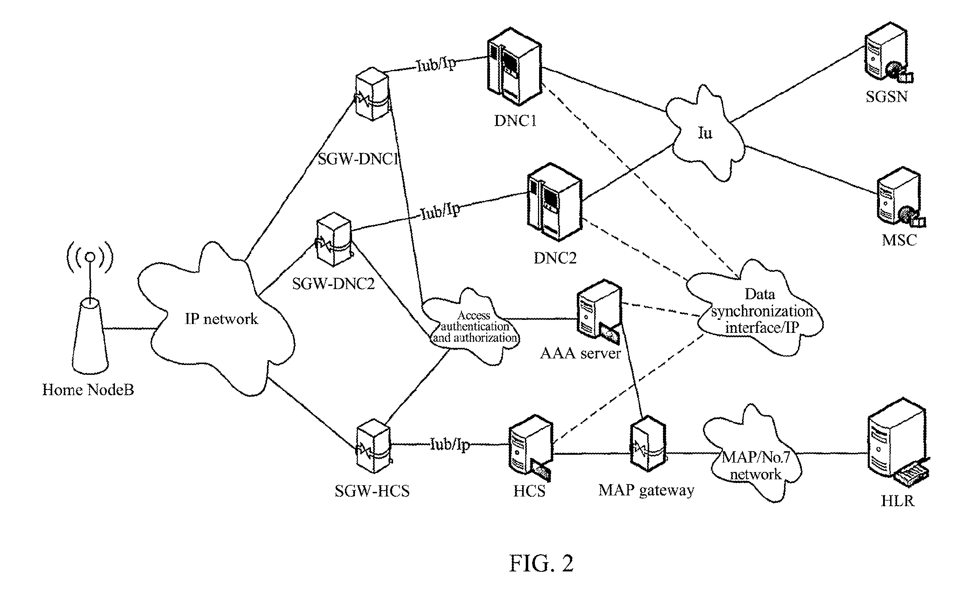

FIG. 2 illustrates a specific application example of a system according to the present invention, and how the self-organizing network achieves self-organization and self-adaptation of operation maintenance management and communication services of the Home NodeB will be set forth by introducing functions of the network devices in the self-organizing network and interactions among the network devices. In the application example of the system, a Home NodeB connects to a SGW through an IP network, and according to connection relations, the SGW comprises a SGW at a DNC side (SGW-DNC) connecting to the DNC and a SGW at a HCS side (SGW-HCS) connecting to the HCS. And in the application example, there are two DNCs, which are DNC1 and DNC2 respectively; the SGW-DNC1 connects with the DNC1, and the SGW-DNC2 connects with the DNC2. Moreover, besides connecting to the HCS, the SGW-HCS, in conjunction with the SGW-DNC1 and SGW-DNC2, connects to an authentication/authorization/accounting server (AAA server) to provide an authentication function for the system, and the information required for the authentication function is acquired from the HCS. The DNC1 and DNC2 connect with a serving GPRS support node (SGSN) and a mobile service switching center (MSC) respectively. The HCS and AAA server both connect to a home location register (HLR) via a MAP gateway. And the DNC1, DNC2, HCS, and AAA server all connect to a data synchronization interface/IP.

In the application example shown in FIG. 2:
an Ipsec/WAN interface for establishing a security path between the Home NodeB and the SGW, i.e. an Ipsec/WAN interface used between the Home NodeB and each of the SGW-HCS, SGW-DNC1 and SGW-DNC2, supports Ipsec and relevant protocols thereof, and uses the Extensible Authentication Protocol (EAP)-Authentication Key Agreement Protocol (AKA) of the Internet Key Exchange version 2 (IKEv2) in establishing an Ipsec path with the SGW-HCS, provides functions for security access and authentication of the Home NodeB, i.e. whether the Home NodeB pertains to the HCS and DNC to be accessed, allocates a VPN IP (the information is from the AAA server) for the Home NodeB, and provides a secure network for interactions among the HCS, DNC, and Home NodeB.

An Iub extension interface is used between the Home NodeB and the DNC1, and based on an Iu interface, supports the Home NodeB in reporting wireless environment information to the DNC through the Iub interface, and meanwhile supports the DNC in allocating a carrier, a scrambler, and a list of adjacent cells to the Home NodeB through the Iub interface according to wireless environment information reported by the Home NodeB, so as to achieve self-adaptation of the communication network. An Iub extension interface is also used between the Home NodeB and the DNC2.

The Home NodeB acquires configuration information (the configuration information includes an identification of the Home NodeB, IP addresses and ports of the SGW-DNC and DNC, candidate carriers of the Home NodeB, the maximum transmit power output of the Home NodeB, and a group number of the Home NodeB ) and version information from the HCS, and runs a version file; with the configuration information, the Home NodeB can access the DNC and implement self-installation, self-configuration, and automatic software update of the Home NodeB; the Home NodeB acquires automatically configuration information, version information, version check, and version update etc. from the HCS each time it is powered up, without interference of a subscriber.

A Radius interface is between the SGW and the AAA server, the SGW-DNC1, SGW-DNC2 and SGW-HCS acquire authentication information and IP address of the Home NodeB from the AAA server, and the authentication includes authentication of the Home NodeB for accessing the HCS and authentication of the Home NodeB for accessing the DNC. The AAA server provides authentication information and IP address of the Home NodeB, and provides flows relevant with the EAP/AKA protocol.

The HCS provides services such as self-installation, self-configuration, and automatic software update for the Home NodeB. The Home NodeB requests automatically configuration information and version information from the HCS each time it is powered up, and the HCS provides configuration information and version information etc. to the Home NodeB upon receiving the request from the Home NodeB, without interference of a subscriber; the alteration and maintenance of the configuration information of the Home NodeB as well as version update are all performed in the HCS. As a data management center of the self-organizing network of the Home NodeB, the HCS may put data required by other devices in the self-organizing network in the HCS for configuration and maintenance, and extend interfaces with other devices, so that the data can be maintained and updated collectively. For example, the HCS provides for a DNC Home NodeB information required, including the Home NodeB ID pertaining to the DNC and International Mobile Subscriber Identities (IMSIs) accessible to the Home NodeB; acquires IMSIs and international mobile subscriber ISDN numbers (MSISDN) pertaining to the Home NodeB from the HLR to inform the DNC of a list of valid subscribers accessible to the Home NodeB pertaining to the DNC; and as a data configuration center, performs centralized management of all the information of the Home NodeB. Authentication information of the Home NodeB is also configured in the HCS similarly, and all the information required for the authentication function provided by the AAA server is acquired from the HCS.

Iu standard interfaces are used between the DNC1, DNC2 and the SGSN, MSC; the DNC1 and DNC2 acquire from the HCS information related to the Home NodeB, including the Home NodeB ID pertaining to the DNC and IMSIs accessible to the Home NodeB, and detect whether a subscriber is one of the valid subscribers of a Home NodeB when the subscriber initiates a call from the Home NodeB, and if the subscriber is invalid, then reject the access of the subscriber, thereby simplifying the authentication process of a subscriber call.

A MAP/No. 7 signaling interface is used between the MAP gateway and the HLR.

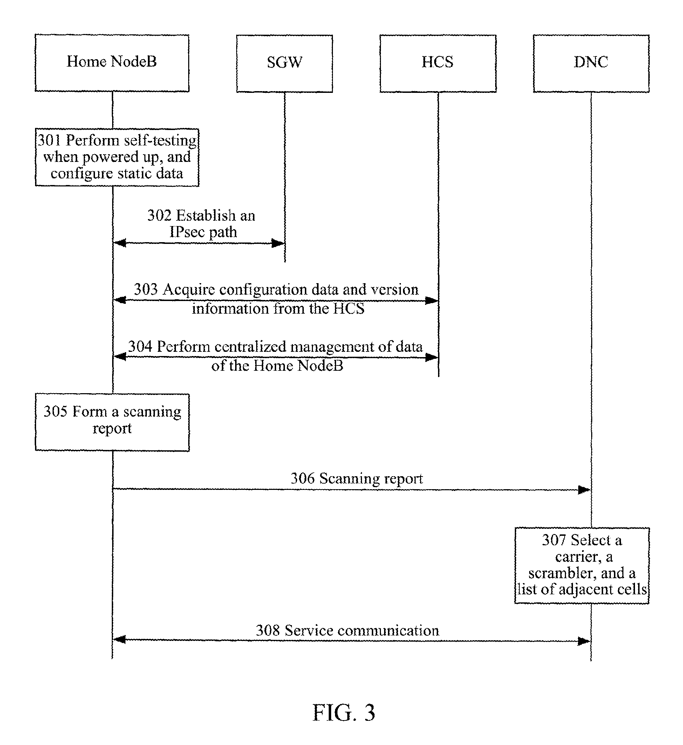

FIG. 3 illustrates the steps of a method of a self-organizing network according to an embodiment of the present invention. The self-organization process of a Home NodeB is as blow:
step 301, the Home NodeB performs self-testing when powered up, and pre-configures static data, the static data including addresses (domain names) of a SGW and a HCS;
step 302, an IPsec path is established between the Home NodeB and the SGW, and the SGW allocates a VPN IP address for the Home NodeB, where the IPsec process comprises authenticating and encryption, and the authentication protocol of IKEv2 is used;
step 303, the Home NodeB initiates a request for acquiring configuration data information and version information to the HCS, and completes configuring system parameters according to the configuration data information if the versions are consistent, so as to achieve self-adaptation of operation maintenance, where the dynamic data acquired comprises: an IP address and port of a DNC, an IP address and port of the SGW, a running version number and version file of the Home NodeB, candidate carriers of the Home NodeB, the maximum transmit power output of the Home NodeB, and a group number of the Home NodeB, etc.
step 304, as a data configuration center, the HCS performs centralized management of the data of the Home NodeB, where the data in the centralized management comprises: the IP address and port of the DNC, the IP address and port of the SGW, the VPN IP address of the Home NodeB, the version information and version file of the Home NodeB, the authentication information of the Home NodeB such as Home NodeB ID, the encrypting information of the Home NodeB such as an encryption key and algorithm, a list of candidate carriers of the Home NodeB, subscriber information of the Home NodeB, comprising names, addresses and contacts of the subscribers, and the maximum transmit power output of the Home NodeB, etc.;
step 305, the Home NodeB scans information of adjacent cells and forms a scanning report, where the Home NodeB scans information of all the adjacent cells within the list of carriers acquired from the HCS according to the list of carriers, and forms the scanning report by reading common pilot channels (CPICH), subsidiary channels (SCH), and broadcast channels (BCH) of the adjacent cells; the content of the scanning report comprises cell IDs detected, the carrier of each cell, the Public Land Mobile Network (PLMN) of each cell, the Received Signal Strength Indicator (RSSI) of each cell, and the scrambler of each cell; if the Home NodeB is located in an area without a Universal Mobile Telecommunication System (UMTS) signal, the scanning report of the Home NodeB is null.
step 306, the Home NodeB sends the scanning report formed from the information of adjacent cells to the DNC;
step 307, the DNC selects a carrier, a scrambler, and a list of adjacent cells of the Home NodeB for the Home NodeB according to the information of adjacent cells reported by the Home NodeB, so as to achieve self-adaptation of communication services; in selecting a carrier, an idle carrier or a carrier with the lowest RSSI may be selected, and in selecting a scrambler, a scrambler with the least conflicts with other cells on the same carrier may be selected; in selecting adjacent cells, there exists two situations: in one of them, the Home NodeB is used in the household mode, then the DNC configures common UMTS cells with higher RSSIs as adjacent cells of the Home NodeB; while in the other situation, the Home NodeB belongs to a group, then other Home NodeB cells in the same group of the Home NodeB are taken as the adjacent cells.
step 308, establishment of the self-organizing network is completed, and normal communication service flow is started.

The group number of the Home NodeB in the above step 303 is used to determine whether the Home NodeB belongs to a certain group or to which group it belongs. If the Home NodeB is used in a household or used as a standalone Home NodeB, the group number is configured as 0, and if the Home NodeB belongs to some group and the group number is n, the DNC configures other Home NodeB cells with the same group number as adjacent cells of the Home NodeB.

From the above embodiments, it can be seen that the Home NodeB can accomplish automatic installation and automatic configuration, provide communication services, and ensure adequate security based on an all-IP network, and the core is: after powered up, the Home NodeB accesses an operation maintenance network and a communication service network, completes data configuration, software installation, and software update automatically, and after accessing the communication service network, performs self-adaptation for network planning and provides communication services. In the technical scheme provided by the present invention, both the operation maintenance network and the communication service network have the self-organizing property, which is especially suitable for a wireless access device such as the Home NodeB of which the operation maintenance and network planning is difficult.

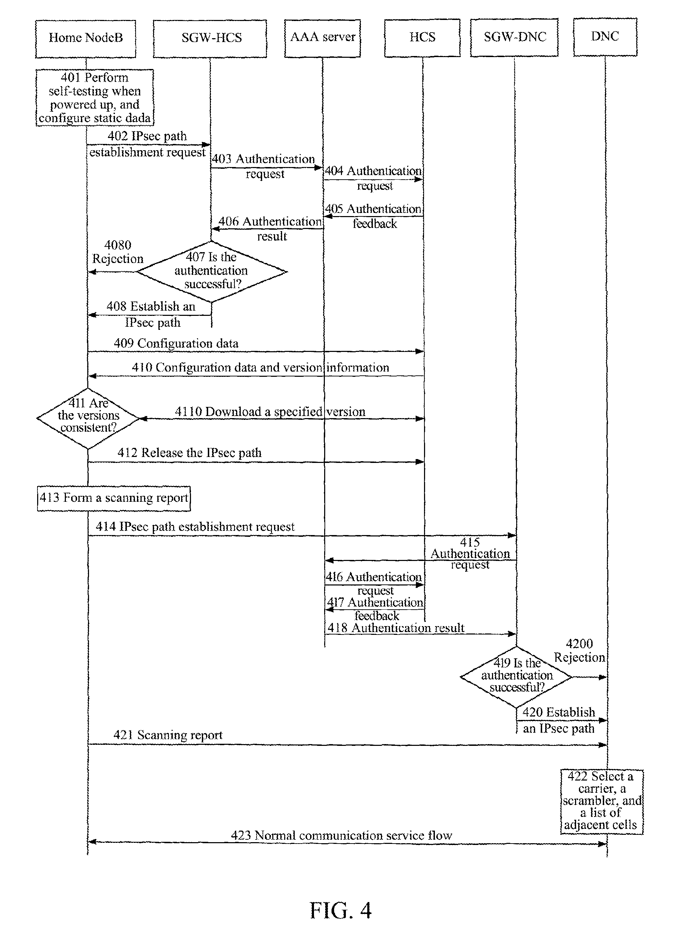

FIG. 4 illustrates an application example of a method according to the present invention, and the flow is:
step 401, a Home NodeB performs self-testing when powered up, and pre-configures static data;
step 402, the Home NodeB sends an IPsec path establishment request for establishing an IPsec path to a SGW-HCS ;
step 403, the SGW-HCS sends authentication request information for authentication of the Home NodeB to a AAA server;
step 404, the AAA server sends the authentication request information to a HCS to request authentication;
step 405, the HCS sends authentication feedback information to the AAA server;
step 406, the AAA server authenticates the Home NodeB, using the IKEv2 protocol, encrypts the authentication result to form authentication result information, and sends the authentication result information to the SGW-HCS;
step 407, according to the authentication result information, the SGW-HCS proceeds to step 408 if the AAA server authentication is successful, otherwise returns information of rejecting access to the Home NodeB (as shown by reference sign 4080 in FIG. 4);
step 408, the SGW-HCS allocates a VPN IP address for the Home NodeB, and establishes an IPsec path with the Home NodeB;
step 409, the Home NodeB sends a configuration data request message for acquiring configuration data to the HCS;
step 410, the HCS returns configuration data of the Home NodeB and version information etc. to the Home NodeB;
step 411, the Home NodeB performs version check according to the version information acquired from the HCS and version information of its own, and if the versions are inconsistent, downloads version information specified by the HCS from the HCS and runs the specified version (as shown by reference sign 4110 in FIG. 4), and then proceeds to step 412, while if the versions are consistent, directly executes step 412;
step 412, the Home NodeB releases the IPsec path with the SGW-HCS;
step 413, the Home NodeB completes configuring system parameters according to the acquired configuration data, scans information of adjacent cells and forms a scanning report;
step 414, the Home NodeB sends an IPsec path establishment request for establishing an IPsec path to the SGW-DNC;
step 415, the SGW-DNC sends authentication request information for authentication of the Home NodeB to the AAA server;
step 416, the AAA server sends the authentication request information to the HCS to request authentication;
step 417, the HCS sends authentication feedback information to the AAA server;
step 418, the AAA server authenticates the Home NodeB, also using the IKEv2 protocol, encrypts the authentication result to form authentication result information, and sends the authentication result information to the SGW-DNC;
step 419, according to the authentication result information, the SGW-DNC proceeds to step 420 if the authentication by the AAA server is successful, otherwise returns information of rejecting access to the Home NodeB (as shown by reference sign 4200 in FIG. 4);
step 420, the SGW-DNC establishes an IPsec path with the Home NodeB;
step 421, the Home NodeB sends the formed scanning report to the DNC;
step 422, the DNC selects a carrier, a scrambler, and a list of adjacent cells of the Home NodeB for the Home NodeB according to the scanning report reported by the Home NodeB, so as to achieve self-adaptation of communication services;
step 423, establishment of the self-organizing network is completed, and a normal communication service flow is started.

Compared with the prior art, the method and system according to the present invention have mainly the following advantages:
(1) IPsec paths are provided for the operation maintenance network and communication service network of the Home NodeB to ensure the security of the operation maintenance process and communication services;
(2) the Home NodeB accomplishes automatic installation, automatic configuration, and automatic software update through the HCS, so as to achieve self-organization of the operation maintenance network;
(3) the Home NodeB forms a scanning report by scanning signals of adjacent cells and reports the scanning report to the DNC, and the DNC configures automatically a carrier, a scrambler, and a list of adjacent cells for the Home NodeB, so as to achieve self-adaptation of wireless environment communication services.

## Claims

1. A system of a self-organizing network, comprising a Home NodeB, and further comprising:
a Home NodeB configuration server, which interacts with the Home NodeB and provides configuration data information and version information for the Home NodeB;
a domestic network controller, which receives a scanning report formed by scanning information of adjacent cells by the Home NodeB and reported by the Home NodeB after the Home NodeB completes system configuration according to the configuration data information and version information, and selects and allocates a carrier, a scrambler and a list of adjacent cells for the Home NodeB; and
a security gateway, connecting with the Home NodeB, Home NodeB configuration server, and domestic network controller, and used to authenticate the Home NodeB and establish respectively paths between the Home NodeB and either of the Home NodeB configuration server and domestic network controller.

2. The system of claim 1, wherein,
the Home NodeB compares acquired version information with version information stored in the Home NodeB, and if the versions are inconsistent, acquires specified version information from the Home NodeB configuration server.

3. The system of claim 1, wherein,
the Home NodeB scans information of all the adjacent cells within a list of carriers according to the list of carriers acquired from the Home NodeB configuration server, and forms the scanning report by reading common pilot channels, subsidiary channels, and broadcast channels of the adjacent cells.

4. The system of claim 1, wherein,
the domestic network controller selects an idle carrier or a carrier with lowest Received Signal Strength Indicator, selects a scrambler with least conflicts with other cells on the same carrier, and selects, according to Received Signal Strength Indicators, common Universal Mobile Telecommunication System cells or takes other Home NodeB cells within a same group of the Home NodeB as adjacent cells of the Home NodeB.

5. The system of claim 1, wherein the security gateway comprises:
a security gateway at the Home NodeB configuration server side, connecting with the Home NodeB configuration server and used to perform authentication when the Home NodeB establishes a path with the Home NodeB configuration server; and
a security gateway at the domestic network controller side, connecting with the domestic network controller and used to perform authentication the Home NodeB establishes a path with the domestic network controller.

6. A method of a self-organizing network, used for self-organization of a Home NodeB, the method comprising steps of:
(1) a security gateway authenticating the Home NodeB and establishing a path between the Home NodeB and a Home NodeB configuration server;
(2) the Home NodeB interacting with the Home Node configuration server and acquiring configuration data information and version information from the Home Node configuration server;
(3) the Home NodeB scanning information of adjacent cells to form a scanning report after completing system configuration according to the configuration data information and version information;
(4) the security gateway authenticating the Home NodeB and establishing a path between the Home NodeB and a domestic network controller;
(5) the Home NodeB reporting the scanning report to the domestic network controller; and
(6) the domestic network controller selecting and allocating a carrier, a scrambler, and a list of adjacent cells for the Home NodeB, and a flow of the self-organizing network ending.

7. The method of claim 6, wherein
the authentication of the Home NodeB by the security gateway in the step (1) is implemented at the Home NodeB configuration server side; and
the authentication of the Home NodeB by the security gateway in the step (4) is implemented at the domestic network controller side.

8. The method of claim 6, further comprising:
in the step (3), the Home NodeB comparing the acquired version information with version information stored in the Home NodeB, and if the versions are inconsistent, acquiring specified version information from the Home NodeB configuration server.

9. The method of claim 6, further comprising:
in the step (3), the Home NodeB scanning information of all the adjacent cells within a list of carriers according to the list of carriers acquired from the Home NodeB configuration server, and forming the scanning report by reading common pilot channels, subsidiary channels, and broadcast channels of the adjacent cells.

10. The method of claim 6, further comprising:
in the step (6), the domestic network controller selecting an idle carrier or a carrier with lowest Received Signal Strength Indicator, selecting a scrambler with least conflicts with other cells on the same carrier, and selecting, according to Received Signal Strength Indicators, common Universal Mobile Telecommunication System cells or taking other Home NodeB cells within a same group of the Home NodeB as adjacent cells of the Home NodeB.
